# EUROPEAN PATENT APPLICATION

(11) **EP 4 807 612 A1**
(43) Date of publication of application: **16.09.2026**
(21) Application number: 25163907.6
(22) Date of filing: 14.03.2025
(51) Int. Cl.: G06F 30/27, G06F 119/06

(54) **COMPUTER-IMPLEMENTED METHOD FOR AUTOMATICALLY CALIBRATING OF A SIMULATION MODEL**

(71) Applicant: ABB SCHWEIZ AG, 5400 Baden (CH)
(72) Inventor: SCHOCH, Nicolai, 69120 Heidelberg (DE); ASHIWAL, Virendra, 68542 Heddesheim (DE); PALACIO, Sebastian, 69221 Dossenheim (DE); RITTER, Marcus, 64297 Darmstadt (DE)
(74) Representative: Maiwald GmbH

(57) **Abstract**

The present invention relates to a computer-implemented method (100) for automatically calibrating a first simulation parameter (6) of a simulation model (1) to compute a performance parameter (3) of an electrical device (50) by a large-language-model-LLM-based agent system (60), comprising the following steps:
- collecting (102), by the agent system (60), first data (4) from the electrical device (50);
- configurating (104), by the agent system (60), the simulation model (1) based on the first data (4);
- calibrating (106), by the agent system (60), of the simulation model (1) by adapting the first simulation parameter (6) of the simulation model (1) based on the first data (4) to achieve that the behavior of the calibrated simulation model (1) approximates to the real behavior of the electrical device (50);
- running (108), by the agent system (60), the calibrated simulation model (1) on basis of second data (5) which relate to at least one scenario parameter (8) that describe a certain target application scenario of the electrical device (50) simulated by the calibrated simulation model (1) to obtain second simulation parameter (7) of the calibrated simulation model (1);
- using (110), by the agent system (60), the calibrated simulation model (1) with the second simulation parameter (7) for a realistic simulation and/or computation of a drive behavior of the electrical device (60);
- optimizing (112), by the agent system (60), the second simulation parameter (7) of the calibrated simulation model (1), with respect to a certain target KPI parameter (9), wherein the step of optimizing the second simulation parameter (7) of the calibrated simulation model (1) also includes optimizing or predicting of the performance parameter (3) of the electrical device (50) for a transfer to the electrical device (50).

## Description

### FIELD OF THE INVENTION

The present invention relates to a computer-implemented method for automatically calibrating a first simulation parameter of a simulation model.

### BACKGROUND OF THE INVENTION

Drives and motors as part of complex real systems can often be fine-tuned in order for better operation. 'Better' here may refer to, e.g., more power-efficient or less energy-consuming, while at the same time providing the same other required features, like maximum speed, torque, etc.

The problem, however, is that it is not always clear how to achieve such improvements, and trying out several parameter/setting combinations may be too expensive or take too much time, or simply not be feasible during operation.

Therefore, simulation may help by providing a means to run what-if-scenarios with various different parameter & equipment setting combinations, even when the drive is part of a larger or more complex drive system (such as a conveyor belt with several drives, etc.).

The problem here in turn, however, is that the simulation and its underlying model for this need to be really fine-tuned and very well calibrated so the simulation really imitates the real drive/motor/powertrain behavior.

Once the real behavior can be imitated, the simulation can be used both for computation or prediction of drive-related characteristics (such as energy consumption data), and also for running what-if scenarios, which in turn can provide insights into how-to-tune the parameters/settings and equipment setup of the drive/motor, e.g., for improved/reduced energy-consumption.

Yet, the human effort in executing the simulation (or simulation scenarios) and the optimization steps is immensely time-consuming. Thus, automation of the entire simulation process would be extremely valuable.

In the context of Industry 4.0 with many use cases including Digital Twins, Virtual Commissioning and Holistic Engineering, simulation of complex systems is getting more and more important.

As mentioned above, simulation is to imitate the behavior of a physical twin/device with focus on a quality of interest, such as, for a motor or drive, e.g., the motor's power consumption, its speed, or the variance of its speed.

Therefore, simulation and the underlying model can also be used for what-if-scenario simulation, e.g., to allow the operator for playing through different scenarios with different setups and different equipment types, and for then choosing the best (where best refers to a chosen metric, which in turn relates to a chosen quality or KPI).

The paper entitled "LLM experiments with simulation: LLM Multi-Agent System for Simulation Model Parametrization in Digital Twins" by Yuchen Xia, Daniel Dittler, Nasser Jazdi, Haonan Chen, Michael Weyrich discloses a design of a multiagent system framework that applies large language models (LLMs) to automate the parametrization of simulation models in digital twins. The proposed approach enhances the usability of simulation models by infusing it with knowledge heuristics from LLM and enables autonomous search for feasible parametrization to solve a user task.

However, the technical approach described therein lacks of several aspects that are nowadays play a major role when controlling an electrical device or an electrical system. In particular, the aspect of bringing in the "real world" as measured using sensors and measurement devices, and by assimilating the simulation model to the real-world-observed behavior, in order to thereon-based predict or optimize selected KPIs to control the electrical device.

A further aspect that is not yet properly addressed in the prior art is, that often there are difficult accuracy/precision requirements imposed on the simulation, i.e., the simulation must be really accurate, in order to enable the user to build upon it an energy optimization or to derive from it the adaptation or tuning of a drive parameter for more efficient drive setup.

Furthermore, another aspect that is not yet properly addressed in the prior art is the self-learning aspect, where a drive/motor/powertrain-related simulation-enhanced commissioning support system is an agent system, which is configured to be integrated into a continuous learning loop to learn on observed process data when performing the process/steps from data assimilation / calibration of the simulation, via simulation, to optimization, to transfer to the real device.

There is a need to address these issues.

### SUMMARY OF THE INVENTION

Therefore, it would be advantageous to provide an improved concept for an improved and automated calibration of a simulation model to adapt simulation of a realistic behavior of an electrical device in an efficient manner in order to optimize the real behavior or real operation behavior of the electrical device.

The object of the present invention is solved by the subject matter of the independent claims, wherein further embodiments are incorporated in the dependent claims.

In a first aspect of the present invention, there is provided a computer-implemented method for automatically calibrating a first simulation parameter of a simulation model to compute a performance parameter of an electrical device by a large-language-model-LLM-based agent system, comprising the following steps:
- collecting, by the agent system, first data from the electrical device;
- configurating, by the agent system, the simulation model based on the first data;
- calibrating, by the agent system, of the simulation model by adapting the first simulation parameter of the simulation model based on the first data to achieve that the behavior of the calibrated simulation model approximates to the real behavior of the electrical device;
- running, by the agent system, the calibrated simulation model on basis of second data which relate to at least one scenario parameter that describe a certain target application scenario of the electrical device simulated by the calibrated simulation model to obtain second simulation parameter of the calibrated simulation model;
- using, by the agent system, the calibrated simulation model with the second simulation parameter for a realistic simulation and/or computation of a drive behavior of the electrical device;
- optimizing, by the agent system, the second simulation parameter of the calibrated simulation model, with respect to a certain target KPI parameter, wherein the step of optimizing the second simulation parameter of the calibrated simulation model also includes optimizing or predicting of the performance parameter of the electrical device for a transfer to the electrical device.

In other words, an important aspect of the present invention is a calibration of a simulation by means of a data-driven setup, e.g. by using data assimilation methods, facilitated by means of an LLM-based Al-agent system, to enable efficient computation or prediction and improvement of the realistic behavior of an electrical device, e.g. optimizing energy-consumption data for a drive/motor or any other technical component of the electrical device that needs to be controlled in an efficient manner.

The proposed solution hence builds on existing simulation tools such as ABB's Virtual Drive , on Data Assimilation methods such as Kalman Filter methods, for calibrating the simulation parameters to the real behavior), and on LLM-based Al agents to facilitate the overall automation of KPI prediction or optimization.

Using simulation tools, such as e.g. the Virtual Drive Pro (and maybe also others), and their execution is by far not as expensive as running real experiments for the electrical device that needs to be controlled in an efficient manner.

However, the fine-tuning and calibration of the simulations and of their underlying mathematical models is still something that is not yet efficiently doable, let alone automated.

Therefore, in a nutstell and in an advantageous framework of the present invention, a solution for this aforementioned problem builds on existing simulation tools (such as Virtual Drive Pro), on Data Assimilation methods (for calibrating the simulation parameters to the real be-havior), and on LLM-based Al agents to facilitate the overall automation.

In particular, the present invention relates to a system and method (a framework) in order to run and evaluate scenarios and thereon-based compute/predict of for example the energy usage of an electrical device and/or thereon-based optimize, i.e., calibrate, the simulation parameters for optimal/minimal energy consumption (under constraints) of the electrical device.

It is noted herein that the energy consumption minimization application is an important aspect for controlling the electrical device. However, the present invention is not restricted to this aspect alone. Therefore, other possible Key performance indicators (KPIs) such as maintenance due times, etc. of the to-be-controlled electrical device depending on the application scenario or to be more general a (technical) behavior or performance of the asset or electrical device can also be flexibly optimized using the method of the present invention.

The system and method (a framework) may be implemented in the following possible, but not limiting constellation framework that
- consists of an LLM-based agent (or a group of agents which can interact with each other)
- with access to measurement and sensor hardware and relevant measurement tools, by using which drive system measurements can be made, and hence using which data points about the drive system's condition/state and behavior can be obtained,
- with access to a data assimilation tool, by using which data-driven fine-calibration of a drive simulation (model) can be achieved (i.e., calibration of somehow initialized, e.g., coarsely/randomly initialized, simulation parameters),
- with access to a simulation tool (e.g., based on Virtual Drive), by using which arbitrary simulation scenarios (i.e., running the simulation model with a set of parameters) can be executed/ran/evaluated, and by using which thus KPIs (such as drive energy usage) can be predicted/computed,
- with access to an optimization tool, which can optimize a selected goal function or KPI, e.g., energy usage minimization/optimization), given a set of simulation parameters to manipulate/set.

The proposed system can be particularly valuable for Drive Digital Twins, or for Virtual Commissioning based on simulation of complex drive systems, possibly containing combinations of drives, e.g., implemented as co-simulations with separate Functional Mockup Units, FMUs, or sub-simulation components.

The present invention provides the following advantages:
Possible Customer Value provided through:
- Productivity increase when operating the electrical device in an efficient manner
- Electrical drive system monitoring, anomaly detection
- Trigger recalibration, trigger maintenance, trigger system calibration improvements
- Beneficial to have (fine-tuned) models of an electrical device or system such as a drive and motor (and of thereon-depending quantities, such as efficiency, etc.) for optimization of basic work/duty cycles
- Optimizing drive system setups according to application scenarios in an efficient manner.
- Using predefined learning models from a customer for drive profiling of the electrical device.

According to an example, the first data relate to technical data of the electrical device which include at least one of the following: a feature, a setting, a condition, a state, or a behavior of the electrical device at a defined point of time, an identified application or installation setup of electrical device. In this way, the simulation of the real behavior of the electrical device is improved.

According to an example, the first data comprise measured or observed sensor data by a sensing device connected to the electrical device. In this way, the simulation of the real behavior of the electrical device is improved.

According to an example, the step of collecting first data includes to obtain application-scenario specific data configured as default or template data stored in a database system that is connected to the agent system. In this way, the simulation of the real behavior of the electrical device is improved and efficiently adapted to a certain application scenario of the electrical device.

According to an example, the agent system comprises at least one agent and / or a group of agents that are connected to each other and that share execution of the method steps in a collaborative and / or a hierarchical collaborative manner. In this way, an efficient and automated operation of the method to compute the performance paramenter of the electrical device is enabled.

According to an example, the agent system is configured to be integrated into a continuous learning loop to after repeating the method steps and / or to learn on observed process data when performing the method steps. In this way, the agent system and its performance to optimize the simulation model is improved.

According to an example, the step of configurating the simulation model includes assigning the first data to at least one model parameter of the simulation model. In this way, the real behavior of the to-be-controlled electrical device is transferred to the simulation of the behavior the electrical device in an efficient manner, so that only parameters of the simulation model are optimized that have an impact on the real behavior of the electrical device.

According to an example, wherein the step of optimizing the second simulation parameter of the simulation model includes one of the following: evaluating the application scenario of electrical device (50), optimizing a selected goal function or key performance indicator (KPI) to achieve a certain behavior of the electrical device (50).

In a second aspect of the present invention, a data processing device is provided comprising means for carrying out the method of any one of the previous examples.

In a third aspect of the present invention, a computer program is provided comprising instructions which, when the program is executed by a computer, cause the computer to carry out the steps of the method of any one of the previous examples.

In a fourth of the present invention, a computer-readable medium is provided comprising instructions which, when executed by a computer, cause the computer to carry out the method according to any one of the previous examples.

### BRIEF DESCRIPTION OF THE DRAWINGS

Exemplary embodiments will be described in the following with reference to the following drawings:
Fig. 1 illustrates a schematic computer-implemented method for automatically calibrating a first simulation parameter of a simulation model to compute a performance parameter of an electrical device according to an embodiment of the present invention; and
Fig. 2 illustrates a schematic agent system to implement the method of the present invention according to an embodiment of the present invention.

### DETAILED DESCRIPTION OF THE DRAWINGS

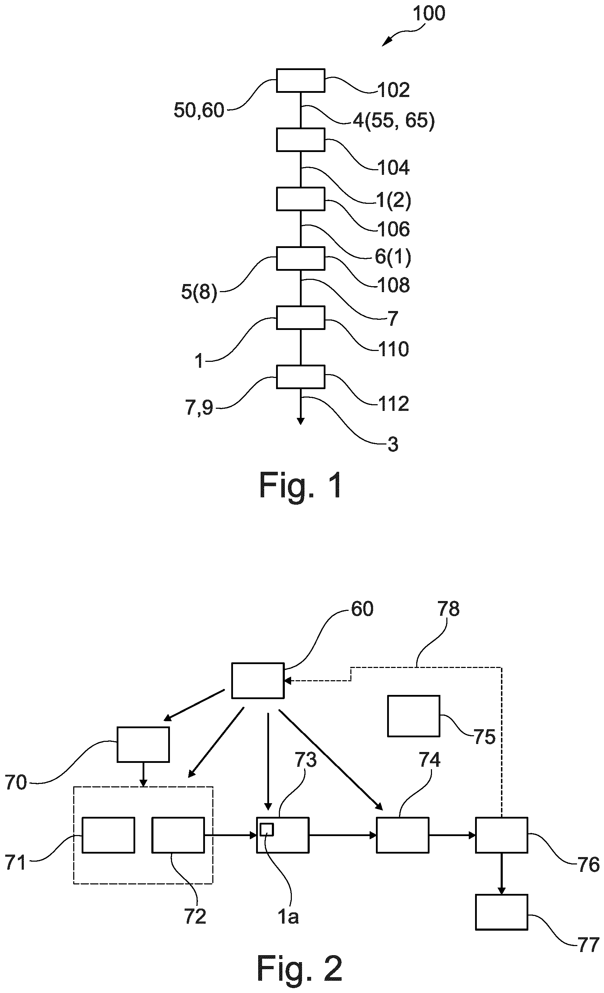

Fig. 1 illustrates a schematic computer-implemented method 100 for automatically calibrating a first simulation parameter of a simulation model to compute a performance parameter of an electrical device according to an embodiment of the present invention.

The computer-implemented method 100 for automatically calibrating a first simulation parameter 6 of a simulation model 1 to compute a performance parameter 3 of an electrical device 50 by a large-language-model-LLM-based agent system 60, comprising the following steps:
- collecting 102, by the agent system 60, first data 4 from the electrical device 50;
- configurating 104, by the agent system 60, the simulation model 1 based on the first data 4;
- calibrating 106, by the agent system 60, of the simulation model 1 by adapting the first simulation parameter 6 of the simulation model 1 based on the first data 4 to achieve that the behavior of the calibrated simulation model 1 approximates to the real behavior of the electrical device 50;
- running 108, by the agent system 60, the calibrated simulation model 1 on basis of second data 5 which relate to at least one scenario parameter 8 that describe a certain target application scenario of the electrical device (50) simulated by the calibrated simulation model 1 to obtain second simulation parameter 7 of the calibrated simulation model 1;
- using 110, by the agent system 60, the calibrated simulation model 1 with the second simulation parameter 7 for a realistic simulation and/or computation of a drive behavior of the electrical device 60;
- optimizing 112, by the agent system 60, the second simulation parameter 7 of the calibrated simulation model 1, with respect to a certain target KPI parameter 9, wherein the step of optimizing the second simulation parameter 7 of the calibrated simulation model 1 also includes optimizing or predicting of the performance parameter 3 of the electrical device 50 for a transfer to the electrical device 50.

It should be noted that although each of the steps 102 to 112 are performed by the agent system 60, it appears clear that other devices, e.g. sensing device 55, may contribute to one or some of the steps 102 to 112, if appropriate.

In step 102 of collecting the first data 4 may be sensed by the sensing device 55 that is connected to the electrical device 50. The first data 4 may be provided by the electrical device 50. Alternatively, the sensing device 55 may provide the first data 4 to the agent system 60 and / or the agent system 60 may request the first data 4 from the sensing device 55 and/or from the electrical device 50.

The electrical device 50 may be an electrical system including technical components that need to be optimized and / or to be controlled in an efficient manner. Optimizing the real behavior of the electrical device 50 may therefore include simulation of the entire electrical device 50 and / or certain technical components of the electrical device 50.

In the context of the present invention, the simulation model 1 may be a simulation model as a base or rough simulation model and that is calibrated in the aforementioned manner according to the method steps of the method 100. Therefore, the reference sign 1a used herein in Fig. 2 in particular may also refer to the calibratred simulation model. However, for reason of simplifying the description, the simulation model 1 may also refer to a calibrated simulation model as well as to a base simulation model without being calibrated.

Optionally, the first data 4 relate to technical data of the electrical device 50 which include at least one of the following: a feature, a setting, a condition, a state, or a behavior of the electrical device 50 at a defined point of time, an identified application or installation setup of electrical device 50.

Optionally, the first data 4 comprise measured or observed sensor data by a sensing device 55 connected to the electrical device 50.

Optionally, the step 102 of collecting first data 4 includes to obtain application-scenario specific data configured as default or template data stored in a database system 65 that is connected to the agent system 60.

Optionally, the agent system 60 comprises at least one agent and / or a group of agents that are connected to each other and that share execution of the method steps in a collaborative and / or a hierarchical collaborative manner.

Optionally, the agent system 60 is configured to be integrated into a continuous learning loop to after repeating the method steps 102 to 112 and / or to learn on observed process data when performing the method steps 102 to 112.

Optionally, the step 104 of configurating the simulation model 104 includes assigning the first data 4 to at least one model parameter 2 of the simulation model 1.

Optionally, the step 112 of optimizing the second simulation parameter 7 of the simulation model 1 includes one of the following: evaluating the application scenario of electrical device 50, optimizing a selected goal function or key performance indicator KPI to achieve a certain behavior of the electrical device 50.

Fig. 2 illustrates a schematic agent system to implement the method of the present invention according to an embodiment of the present invention.

The agent system 60 could even be provided with further information on e.g., how the load, e.g. a motor or drive device, is connected, what are the inertias, etc. for controlling it and /or for optimizing its operational behavior, and thus, this may also hint the agent system 60 towards a suitable or optimized setup of the simulation model. This contributes to an efficient finding of the optimal setup.

In Fig. 2, the system according to the technical approach of the present invention is summarized and explained in more detail in the following. Although the Fig. 2 shows a certain flow of information in one direction, the present invention is not restricted to such an information flow and thus, the order of the execution of the used tools described in the following may vary depending on the application scenario to optimize simulation of the behavior of the electrical device 50 and to transfer the obtrained simulation values or simulation parameters to the real electrical device 50.

The proposed system and method comprises the following components:
An agent system 60 that might consist of a plurality or a group of sub-agents and that are connected to each other to be able to communicate with each other and to exchange information that is necessary to achieve an optimized and calibrated simulation model 1a, 76.

First, a sensing tool 70 is used that includes the relevant measurement tools which may be configured as measurement and sensor hardware or physical sensing devices.

When using these physical sensing devices, measurements of the operational behavior of the electrical device 50 can be made. This allows the agent system 60, through agentic function calling and/or tool use, to obtain characteristic data points about a condition/state or behavior of the electrical device at any requested point of time.

Second, the measured data form the physical sensing devices are forwarded to a data assimilation tool 71. This data assimilation tool 71, in conjunction with a simulation tool 72, 73, allows to find out which data-driven fine-calibration of a simulation (model 1) can be achieved, e.g. calibration of coarsely/randomly initialized simulation parameters of the simulation mode 1.

The data assimilation tool 71 is further able to match (a) a generic/rough/coarse mathematical model and numerical simulation of a electrical device 50, e.g. a drive/motor/powertrain, with the observed/measured data (observed from the real (to-be-simulated) electrical device 50 using the above-mentioned measurement devices and sensing tools 70. These data from the real electrical device 50 might also or additionally be obtained by historical records of a database to which the agent system 60 is conneced.

Miscellaneous data assimilation technologies can be used: Kalman filters, math. line-ar/nonlinear optimization/minimization, reinforcement learning, etc. There are also commercial tools available, such as Matlab's Parameter Estimator or Design Optimization Toolbox, etc.

A possibly further aspect of this invention could be to have this component consider domain knowledge, e.g., the typical work cycle of a drive-based machine, execution phases, etc.

The output or result of the data assimilation tool 71 is a fine-tuned & calibrated operational simulation model 1a, 76 of the electrical device 50.

Second, the present invention is implemented by using a simulation tool 72, 73 (e.g., based on ABB's Virtual Drive Software) for simulation of the behaviour of the electrical device 50:
Using this tool, arbitrary simulation scenarios (i.e., running the simulation model 1 with a set of parameters) can be executed/ran/evaluated. This simulation tool 72, 73 can be used to execute/run the previously calibrated (data-assimilation-based-fine-tuned) simulation model or models 76 along with required parameters to describe application-dependent simulation scenarios.

The simulation model can be used to run the simulation of the electrical device 50 and thus, enables to predict, for example, the energy consumption (or other characteristics) of the drive system based on the simulation. This can optionally be done in parallel to the real system.

The calibrated simulation model 1, 1a can be used to run several (either human-intended/selected or automatically random/purpose-suggested) what-if-scenarios with different simulation parameters, with different equipment types, etc. and thus get insights into the improvement potential, e.g., information on energy savings potential given other equipment and parameter settings.

For the purpose of setting up and executing such several what-if-scenarios, the additional optimization tool 74 can be used, which sets up and selects and executes several what-if-scenarios to get the optimal parameters for the calibrated and optimized simulation model 76.

The output of this optimization tool 74 would be an optimized (calibrated) simulation model for a drive execution scenario or for the computation of a value which is based on a certain or predefined simulation scenario. For example, the predicted energy consumption may be based on the respectively given parameter settings of the electrical drive 50.

The optimization tool 74 can be provided with the following inputs:
Using this tool, a selected goal function or KPI can be optimized, given a set of simulation parameters to manipulate/set.

In order to conduct a gradient-based optimization, a grid of parameters may be used and accordingly a set of what-if-scenarios is executed, in order to finally find the optimal parameters for the calibrated simulation model 1a.

The optimization tool 74 could also automatically trigger parameter/setting changes, e.g., in a random way, e.g. a simple Monte Carlo method, trying out possible combinations, or in a grid-kind-of-way, e.g. structured all-to-all combinations, or even in a smarter manner, e.g. structured, history-based, learned combinations.

The output of the optimization tool 74 is a proposal of the optimal parameter settings of the electrical device 50 as found from the optimal simulation scenario, e.g., along with what energy saving potential is given in case of equipment or parameter changes.

Through calculating or simulating the savings, the focus is on power-efficiency or sustainability in general, based on the real identified and calibrated motor and load.

Hence, the value for the customer is to be seen in an increase of productivity and energy efficiency for the electrical device 50, e.g. a powertrain system.

The LLM-based Al agent(s) has/have access to all of the mentioned tools 70, 71, 72, 73, 74, 75, 76 and specifically has/have the appropriate role and task and tool access defined, to function as respectively responsible expert for operating/executing them and further processing the respectively obtained (interim) results.

With these tools/components 70, 71, 72, 73, 74, 75, 76 available, and with the (LLM-based) Al agent(s) of the agent system 60, it is possible to access these tools with its human-like understanding of the resulting outputs from the respective steps in the workflow 102-112 (which are executed by the tools/components 70-76/77), to allow to automate the process of running and evaluating application scenarios and thereon-based computation/prediction of the behavior of the electrical device 50, e.g. a drive's/system's energy usage.

Further, optimization, i.e., calibration, of the simulation parameters for optimal behaviour, e.g. minimal energy consumption under predefined constraints, is possible.

Third and finally, by using the optimized and calibrated simulation model 1a with the obtained simulation parameters, the transfer of the obtained simulation results or rather of respectively the optimized drive simulation parameters/settings to the real behavior of the electrical device 50 is conducted by setting up the corresponding parameter settings of the electrical device 50 to control and / or to operate it in an optimal manner taking into account the individual application scenario of the electrical device 50.

Further, as shown in Fig. 2 with the loop 78, the agent system 60 is configured to be integrated into a continuous learning loop to after repeating any or parts of the method steps 102 to 112 and / or to learn on observed process data when performing any or parts of the method steps 102 to 112. In this way, the agent system 60 can be trained and improved, so that calibrating of a simulation model and / or the optimization of the simulation model according to a specific application scenario of the electrical device 50 can be performed in a more efficient manner.

The proposed system or invention can be particularly valuable for Drive Digital Twins, or for Virtual Commissioning based on simulation of complex drive systems, possibly containing combinations of drives, e.g., implemented as co-simulations with separate FMUs or sub-simulation components.

The proposed solution hence builds on existing Simulation Tools (such as ABB's Virtual Drive Software), on data assimilation methods (like simple or advanced Kalman Filter-based methods, for calibrating the simulation parameters to the real behavior), and on LLM-based Al agents to facilitate the overall automation of the entire workflow around KPI prediction or optimization.

In summary, the present invention enables the automation of the overall process of fine-tuning and calibration of one or a plurality of simulation models for simulation-based KPI-/parameter-/equipment-based optimization and commissioning of an electrical device 50.

### Reference signs

- 1, 1a: Simulation model
- 2: Simulation model paramter
- 3: Performance parameter
- 4: First data
- 5: Second data
- 6: First simulation parameter
- 7: Second simulation parameter
- 8: Scenario parameter
- 9: Target KPI/metric parameter

- 50: Electronic device
- 55: Sensing device
- 60: Agent system
- 65: Database system
- 70: Sensing tool
- 71: Data Assimiation tool
- 72: Simulation tool
- 73: Simulation tool
- 74: Opimization tool
- 75: KPI tool
- 76: Optimized calibrated simulation model
- 77: Tranfer tool
- 78: Loop

- 100: Method
- 102: Collecting
- 104: Configurating
- 106: Calibrating
- 108: Running
- 110: Using
- 112: Optimizing

## Claims

1. Computer-implemented method (100) for automatically calibrating a first simulation parameter (6) of a simulation model (1) to compute a performance parameter (3) of an electrical device (50) by a large-language-model-LLM-based agent system (60), comprising the following steps:
- collecting (102), by the agent system (60), first data (4) from the electrical device (50);
- configurating (104), by the agent system (60), the simulation model (1) based on the first data (4);
- calibrating (106), by the agent system (60), of the simulation model (1) by adapting the first simulation parameter (6) of the simulation model (1) based on the first data (4) to achieve that the behavior of the calibrated simulation model (1) approximates to the real behavior of the electrical device (50);
- running (108), by the agent system (60), the calibrated simulation model (1) on basis of second data (5) which relate to at least one scenario parameter (8) that describe a certain target application scenario of the electrical device (50) simulated by the calibrated simulation model (1) to obtain second simulation parameter (7) of the calibrated simulation model (1);
- using (110), by the agent system (60), the calibrated simulation model (1) with the second simulation parameter (7) for a realistic simulation and/or computation of a drive behavior of the electrical device (60);
- optimizing (112), by the agent system (60), the second simulation parameter (7) of the calibrated simulation model (1), with respect to a certain target KPI parameter (9), wherein the step of optimizing the second simulation parameter (7) of the calibrated simulation model (1) also includes optimizing or predicting of the performance parameter (3) of the electrical device (50) for a transfer to the electrical device (50).

2. Computer-implemented method (100) according to claim 1, wherein the first data (4) relate to technical data of the electrical device (50) which include at least one of the following: a feature, a setting, a condition, a state, or a behavior of the electrical device (50) at a defined point of time, an identified application or installation setup of electrical device (50).

3. Computer-implemented method (100) according to any of the previous claims, wherein the first data (4) comprise measured or observed sensor data by a sensing device (55) connected to the electrical device (50).

4. Computer-implemented method (100) according to any of the previous claims, wherein the step (102) of collecting first data (4) includes to obtain application-scenario specific data configured as default or template data stored in a database system (65) that is connected to the agent system (60).

5. Computer-implemented method (100) according to any of the previous claims, wherein the agent system (60) comprises at least one agent and / or a group of agents that are connected to each other and that share execution of the method steps in a collaborative and / or a hierarchical collaborative manner.

6. Computer-implemented method (100) according to any of the previous claims, wherein the agent system (60) is configured to be integrated into a continuous learning loop to after repeating the method steps (102) to (112) and / or to learn on observed process data when performing the method steps (102) to (112).

7. Computer-implemented method (100) according to any of the previous claims, wherein the step (104) of configurating the simulation model (104) includes assigning the first data (4) to at least one model parameter (2) of the simulation model (1).

8. Computer-implemented method (100) according to any of the previous claims, wherein the step (112) of optimizing the second simulation parameter (7) of the simulation model (1) includes one of the following: evaluating the application scenario of electrical device (50), optimizing a selected goal function or key performance indicator (KPI) to achieve a certain behavior of the electrical device (50).

9. A data processing device comprising means for carrying out the method of any one of the claims 1 to 8.

10. A computer program comprising instructions which, when the program is executed by a computer, cause the computer to carry out the steps of the method of any one of the claims 1 to 8.

11. A computer-readable medium comprising instructions which, when executed by a computer, cause the computer to carry out the method according to any one of the claims 1 to 8.
